# EUROPEAN PATENT SPECIFICATION

(11) **EP 2 692 965 B1**
(45) Date of publication and mention of the grant of the patent: **21.12.2016**
(21) Application number: 11862425.3
(22) Date of filing: 28.12.2011
(51) Int. Cl.: E04H 5/02, G21D 1/00, G21C 21/00

(54) **MODULE STRUCTURE AND MODULE CONSTRUCTION METHOD**
MODULSTRUKTUR UND MODULKONSTRUKTIONSVERFAHREN
STRUCTURE DE MODULE ET PROCÉDÉ DE CONSTRUCTION DE MODULE

(30) Priority: 29.03.2011 JP 2011073223
(43) Date of publication of application: 05.02.2014
(73) Proprietor: Hitachi Plant Construction, Ltd., Tokyo (JP)
(72) Inventor: SATO Koji, Tokyo 170-8466 (JP); EBATA Shinichi, Tokyo 170-8466 (JP); MAKITA Tatsuo, Tokyo 170-8466 (JP); IMAOKA Shizuo, Tokyo 170-8466 (JP); YOSHIZAKI Masatoshi, Tokyo 170-8466 (JP); IDEBASHI Naritoshi, Tokyo 170-8466 (JP); TAMURA Kensuke, Tokyo 170-8466 (JP)
(74) Representative: Beetz & Partner mbB
(86) International application number: PCT/JP2011/080473
(87) International publication number: WO 2012/132161

(56) References cited:
- WO-A1-97/28333
- JP-A- 8 086 037
- JP-A- 9 209 589
- JP-A- H0 886 037
- JP-A- 61 162 679
- JP-A- 61 270 437
- JP-A- H09 209 589
- JP-A- 2000 072 379
- JP-A- 2000 072 379
- US-A1- 2010 300 013

## Description

### TECHNICAL FIELD

The present invention relates to a modular structure and a modular construction method using the modular structure, and more particularly, to a modular structure and a modular construction method suitable for plant construction such as atomic power generation. A modular structure and a modular construction method as described in the preamble portions of patent claims 1 and 9, respectively, have been known from JP 2000 072379 A (Patent Document 2).

### BACKGROUND ART

A plant such as an atomic power plant is housed in a reinforced concrete construction building. This building is partitioned into a plurality of compartments depending on an equipment type or the like. Such a plant construction method of the related art is roughly classified into a process of forming a plurality of compartments by arbitrarily partitioning the plant building whenever equipment is installed and a process of installing pipes/equipment in each of the formed compartments.

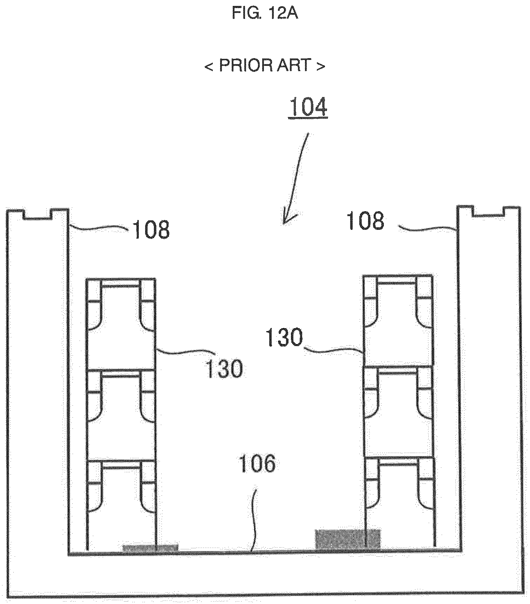

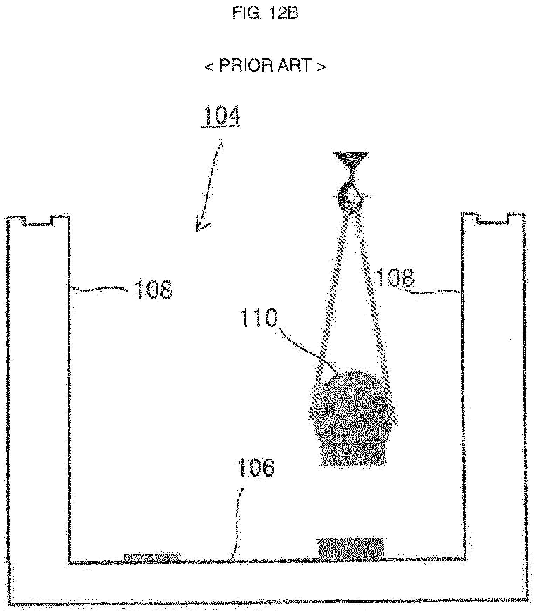

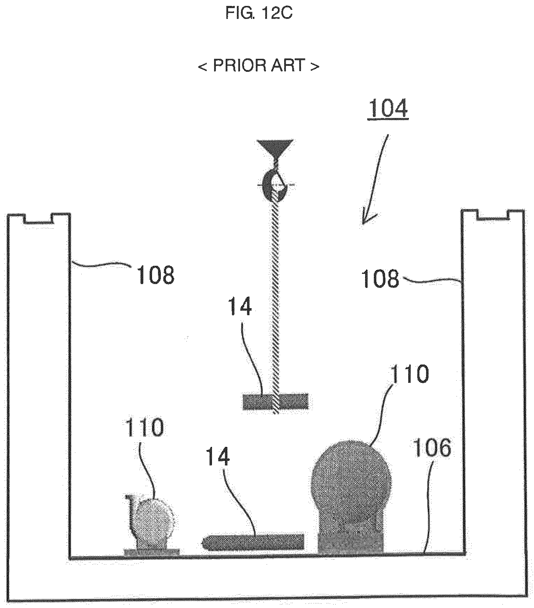

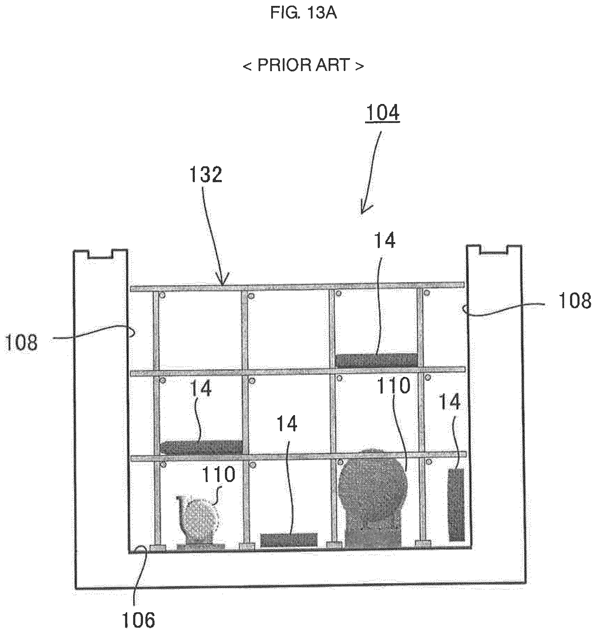

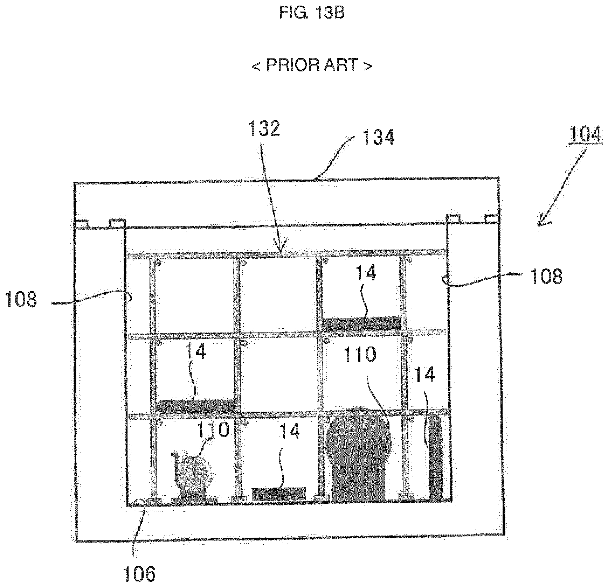

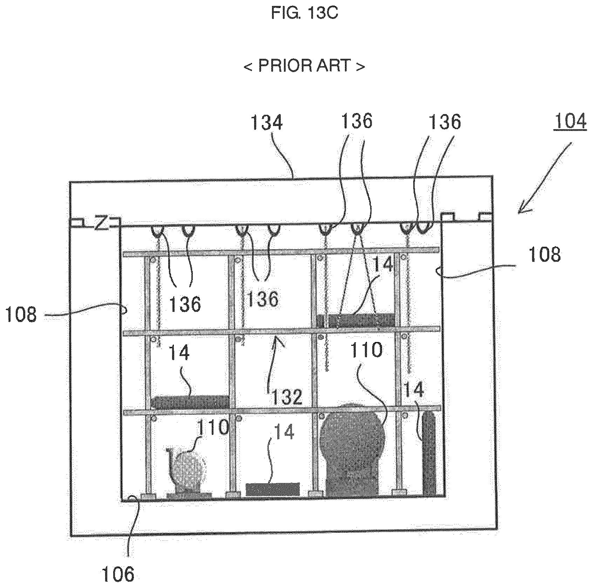

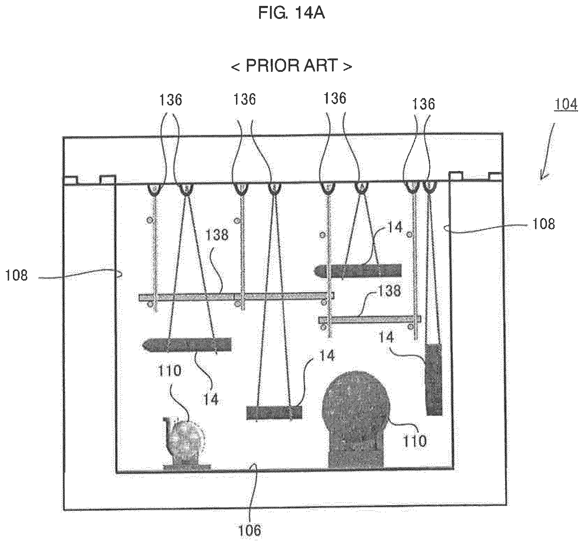

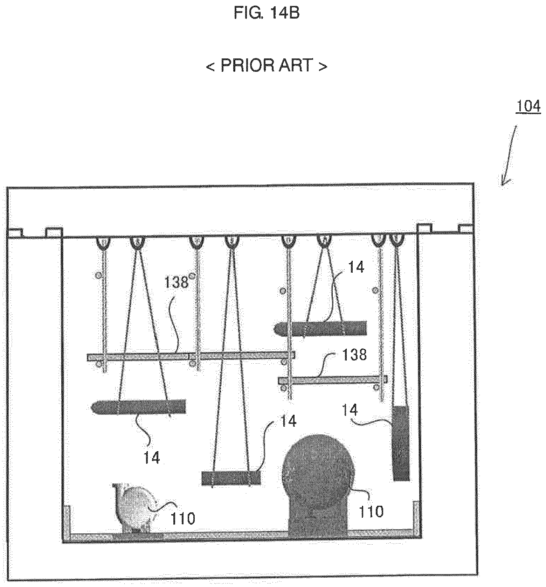

FIGS. 12A to 12C, 13A to 13C, 14A, and 14B are explanatory diagrams illustrating a plant construction work of the related art. FIG. 12A illustrates a sidewall concrete application process. FIG. 12B illustrates an equipment loading process. FIG. 12C illustrates an equipment component loading process. FIG. 13A illustrates a scaffold constructing process. FIG. 13B illustrates a ceiling concrete application process. FIG. 13C illustrates a hanging tool installation process. FIG. 14A illustrates a scaffold removal process. FIG. 14B illustrates a painting process.

As illustrated in FIG. 12A, in the compartment 104 obtained by partitioning the plant building, after a concrete application work for a floor surface 106 is completed, a working scaffold 130 for forming sidewalls 108 is assembled. In addition, after the concrete application to the sidewall 108 is completed, the working scaffold 130 is removed. Then, the equipment 110 provided in the compartment 104 using a large crane from the ceiling surface is loaded as illustrated in FIG. 12B, and an equipment component 14 such as a pipe is loaded as illustrated in FIG. 12C.

As illustrated in FIG. 13A, a scaffold 132 for a ceiling work is installed, and an equipment component 14 is temporarily arranged in the scaffold 132. Then, concrete is applied to a formwork on the ceiling surface of the compartment 104 to form a ceiling 134 as illustrated in FIG. 13B. In addition, a hanging tool 136 is installed in the ceiling 134 as illustrated in FIG. 13C.

Then, as illustrated in FIG. 14A, the equipment component 14 is hung using the hanging tool 136, and a suspended scaffold 138 is hung using the hanging tool 136. A painting work is performed for the sidewall 108 of the compartment 104 using the installed scaffold 132 (or the suspended scaffold 138), and the scaffold 132 is then removed.

As illustrated in FIG. 14B, a painting work is performed for the floor surface 106 or a spandrel wall (sidewall 108). In this manner, in the compartment 104, the painting work is performed for the sidewall 108 or the floor surface 106 of the compartment 104 before the equipment component 14 is fixedly installed in the equipment 110.

In such a construction method of the related art, the following problems may occur.
(1) Since the working scaffold 130 used to apply concrete into a formwork for forming a concrete wall remains in an interior space when the sidewall 108 of the compartment 104 is constructed, an opening space of the ceiling surface is reduced. Therefore, the working scaffold 130 used to apply concrete into a formwork for forming a concrete wall and the equipment component 14 hung using the large crane may interfere with each other, so that the amount of materials loaded in the compartment 104 may be restricted. In addition, since the amount of materials that can be loaded once is restricted, the loading is inevitably performed a plurality of times using a large crane.
(2) When the equipment 110 is installed in the vicinity of the sidewall 108, it is necessary to move the working scaffold 130 installed in advance to apply concrete into a formwork for forming a concrete wall and then perform an installation work. Therefore, the work for moving the working scaffold 130 is frequently performed. Since such a scaffold movement generates an assembling/disassembling work, a construction procedure is interrupted tentatively.
(3) In the loading using a large crane, the equipment component 14 is temporarily placed on the floor surface 106. For this reason, as the construction of the equipment 110 advances, it is difficult to obtain a temporary placing room. Therefore, similarly, the construction procedure is interrupted tentatively.

In this manner, in the construction method of the related art, since the concrete application period and the period for loading the equipment 110 overlap with each other, the construction procedure is significantly affected.

Meanwhile, there is known a construction method that employs a modular structure obtained by installing the equipment component in advance in order to reduce a construction period. A construction method of such a plant facility is disclosed in Patent Documents 1 and 2.

According to the pipe modular construction method disclosed in Patent Document 1, equipment, pipes, and the like are assembled as a module in an external factory in advance. After a floor of the equipment compartment is constructed, the module is delivered and fixed, and pipes, air-conditioning ducts, and the like are connected. As a result, it is possible to simplify and expedite the construction.

According to the pipe modular construction method disclosed in Patent Document 2, components are hung from a top plate using a hanging means and are move on a rail while the hanging state is maintained. Then, the components are lifted using a crane and are moved to an installation position.

However, according to the pipe modular construction method disclosed in Patent Document 1, various apparatuses or pipes are assembled and fixedly installed in installation positions on a fixedly installed operating platform in a factory, and each pipe module is loaded in a construction site and is fixed through welding. For this reason, in a construction site where the fixedly installed operating platform is not laid out in the compartment, it is difficult to set the pipe in a regular position, and there are a lot of areas where it is difficult to apply the modular construction method. In addition, there is a restriction in a size and a weight of the module that can be delivered from a factory, and a delivery cost may increase.

According to the pipe modular construction method disclosed in Patent Document 2, since a component is hung with the hanging means, it is not necessary to provide an overturning prevention member or a temporary reinforcement member of the component. In addition, it is possible to eliminate an effort to assemble or disassemble components. However, since it is difficult to hang vertically overlapping components using the hanging means, there is a restriction in application. Furthermore, in a case where the components are overlapped in a lot of areas, it is difficult to obtain high positioning accuracy.

Patent Document 2 (JP 2000 072379 A) discloses a modular structure comprising: a hanging means that is suitable for hanging a first equipment component arranged in a compartment of a plant and has a length adjusted depending on a layout arrangement position of the first equipment component in the compartment; and a first beam suitable for being arranged in the compartment, the hanging means being installed in the first beam to hang the first equipment component from the first beam.

This document further discloses a modular construction method comprising: hanging a first equipment component loaded in a compartment of a plant using a hanging means having a length adjusted to match a layout installation position of the first equipment component in the compartment; installing the hanging means in a first beam; and temporarily supporting the first equipment component in the installation position by loading the first beam in the compartment while the first equipment component is hung.

FIG. 15 is an explanatory diagram illustrating a modular structure disclosed in Patent Document 3. In order to address the problems discussed in Patent Documents 1 and 2, Patent Document 3 discloses a modular structure 200 including: a support member 202 that temporarily supports, in a layout position, an equipment component 14 arranged in a compartment and serves as a scaffold for installing the equipment component 14 and forming the compartment; and a box-like frame 204 that can be loaded into an internal space of the compartment and can be used to fix the support member 202. Such a technique is also disclosed in Patent Documents 4 and 5.

The modular structure 200 having the support member 202 and the frame 204 independently stands without interfering with equipment already arranged on the floor surface when the modular structure 200 is arranged in the compartment. Therefore, the equipment component 14 supported by the modular structure 200 is temporarily supported in a layout position in the compartment.

Since the modular structure 200 of Patent Document 3 temporarily supports the equipment component 14, it is possible to easily position the equipment component 14 relatively to a base structure such as metal accessories or existing pipes when it is loaded and fixedly installed in the compartment. In addition, the support member 202 of the modular structure 200 temporarily supports the equipment component 14 and also serves as a scaffold used in both an installation work and a construction work. Therefore, it is possible to perform a construction work of the compartment in parallel with the installation work and eliminate necessity of providing a separate scaffold in the installation position. Accordingly, it is possible to expedite a construction period.

### [Citation List]

### [Patent Literatures]

Patent Document 1: Japanese Unexamined Patent Application No. S62-228975 A
Patent Document 2: Japanese Unexamined Patent Application No. 2000-72379 A
Patent Document 3: Japanese Unexamined Patent Application No. 2010-275782 A
Patent Document 4: Japanese Unexamined Patent Application No. 2003-13621 A
Patent Document 5: Japanese Unexamined Patent Application No. 2003-41661 A

### DISCLOSURE OF INVENTION

### PROBLEM TO BE SOLVED BY THE INVENTION

When the modular structure 200 of Patent Document 3 is employed, a painting work is performed for the sidewall or the floor surface of the compartment by using the modular structure 200 as a scaffold before the equipment component 14 is fixedly installed in the equipment 110 in the compartment. However, since a plurality of the support members 202 or the frames 204 of the modular structure 200 are arranged on the floor surface of the compartment, it is difficult to perform the painting work.

In view of the aforementioned problems, it is therefore an object of this invention to provide a modular structure and a modular construction method capable of implementing a modular construction work even in an area where equipment pipes are not densely laid out, and the number of temporary installation members increases. In addition, the invention provides a modular structure and a modular construction method capable of applying a modular construction work in a narrow area and reducing a construction period. Furthermore, the invention provides a modular structure and a modular construction method capable of temporarily supporting the equipment component and easily performing a painting work for the floor surface.

### MEANS FOR SOLVING PROBLEM

The invention is defined in the appended claims. J According to the invention, there is provided a modular structure including: a hanging means that is hanging a first equipment component adapted to be arranged in a compartment of a plant and has a length adjusted depending on a layout arrangement position of the equipment component in the compartment; and a first beam suitable for being arranged in the compartment, the hanging means being installed in the first beam to hang the first equipment component from the first beam, wherein a suspended scaffold is hung with a hoisting chain from the first beam, and the first equipment component is temporarily supportable in the arrangement position, and the suspended scaffold is used as a scaffold when the first equipment component of the compartment is fixedly installed in a second equipment in the compartment of the plant

In this configuration, it is possible to float the first equipment component and the hanging means used to hang the first equipment component from the floor surface of the compartment. Therefore, it is possible to implement a modular construction method while suppressing the number of temporary installation members such as a scaffold on the floor surface to the minimum. In addition, it is possible to easily perform a painting work for the floor surface.

In the aforementioned modular structure, the first beam may be arranged in a sidewall of the compartment and be supported by a support member exposed to an inner space side of the compartment.

In this configuration, since the first beam is supported by the support member, it is not necessary to arrange a plurality of support members that temporarily support the first equipment component on the floor surface unlike the related art. Therefore, it is possible to easily perform a paining work for the floor surface.

In the aforementioned modular structure, a second beam may be hung from the first beam, and the hanging means may be installed in the first beam and the second beam.

In this configuration, it is possible to hang the first equipment component from the second beam in a position lower than that of the second beam in the compartment. As a result, it is possible to shorten a length of the hanging means, alleviate a vibration of the first equipment component, and lower a possibility of failure.

In the aforementioned modular structure, the first beam may be supported by a post connected to the first beam and erectable on a floor surface of the compartment.

In this configuration, since the first beam is supported by the post, it is possible to temporarily support the first equipment component without performing a special work for the sidewall and easily perform a painting work for the floor surface.

In the aforementioned modular structure, the second beam may be connected to the post in a position lower than that of the first beam, and the hanging means may be installed in the first beam and the second beam.

In this configuration, it is possible to hang the first equipment component from the second beam in a position lower than that of the second beam in the compartment. As a result, it is possible to shorten a length of the hanging means, alleviate a vibration of the first equipment component, and lower a possibility of failure. In addition, since the posts are connected by the second beam, it is possible to improve rigidity of the modular structure and hang a plurality of equipment components.

In the aforementioned modular structure, the first beam may be supported by a support member arranged in a sidewall of the compartment and exposed to an inner space side of the compartment and a post connected to the first beam and erectable on a floor surface of the compartment.

For example, in a case where concrete is still applied to one of sidewalls, or it is difficult to obtain a strength due to a short curing period, the support member may be arranged only in the other sidewall as described above, and one end of the first beam in a longitudinal direction may be supported by the support member while the other end is supported by the post. Therefore, it is possible to change a method of supporting the beam depending on a situation of the sidewall.

In the aforementioned modular structure, a center of the first beam in a longitudinal direction may be supported by a second post arranged on a floor surface of the compartment.

In this configuration, it is possible to prevent bending of the first beam and hang a plurality of equipment components from the first beam.

The aforementioned modular structure may further include: a second equipment component arranged right under the first equipment component; and a frame that is arranged to extend across the first equipment component, supports the second equipment component, and is hung by the hanging means.

In this configuration, it is possible to independently hang the first equipment component and the second equipment component regardless of vertical interference.

According to the invention, there is also provided a modular construction method including: hanging a first equipment component loaded in a compartment of a plant using a hanging means having a length adjusted to match a layout installation position of the first equipment component in the compartment; installing the hanging means in a first beam; and temporarily supporting the first equipment component in the installation position by loading the first beam in the compartment while the first equipment component is hung, the first equipment component is temporarily supportable in the arrangement position, and a suspended scaffold is hung with a hoisting chain from the first beam, and the suspended scaffold is used as a scaffold, while a sidewall of the compartment is painted.

In this configuration, it is possible to float the first equipment component and the hanging means used to hang the first equipment component from the floor surface of the compartment. Therefore, it is possible to easily perform a paining work for the floor surface.

In the aforementioned modular construction method, the first beam may be supported by a support member arranged in a sidewall of the compartment and exposed to an inner space side of the compartment and/or a post connected to the first beam and erectable on a floor surface of the compartment.

In a case where the beam is supported by the support member, a plurality of the support members that temporarily support the first equipment component are not arranged on the floor surface. Therefore, it is possible to easily perform a painting work for the floor surface. In addition, in a case where the first beam is supported by the post, it is possible to temporarily support the first equipment component without performing a special work for the sidewall and easily perform a painting work for the floor surface. In addition, for example, in a case where concrete is still applied to one of the sidewalls, or it is difficult to obtain a strength due to a short curing period, the support member is arranged only in the other sidewall, and one end of the beam in the longitudinal direction is supported by the support member while the other end is supported by the post. Therefore, it is possible to change a beam supporting method depending on a forming situation of the sidewall.

### EFFECT OF THE INVENTION

In the modular structure and the modular construction method according to the present invention, it is possible to temporarily support the equipment component in a layout position of the compartment and suppress interference with the floor surface to the minimum. Therefore, it is possible to efficiently perform a work for the floor surface such as a painting.

### BRIEF DESCRIPTION OF DRAWINGS

FIG. 1 is an explanatory diagram illustrating an atomic power plant;
FIG. 2 is an explanatory diagram illustrating a modular structure according to a first example;
FIG. 3A is an explanatory diagram illustrating an assembling process of a construction method using the modular structure according to the first example;
FIG. 3B is an explanatory diagram illustrating a delivery process of the construction method using the modular structure according to the first example;
FIG. 4A is an explanatory diagram illustrating a slinging process of the construction method using the modular structure according to the first example;
FIG. 4B is an explanatory diagram illustrating a hoisting process of the construction method using the modular structure according to the first example;
FIG. 5A is an explanatory diagram illustrating a loading process of the construction method using the modular structure according to the first example;
FIG. 5B is an explanatory diagram illustrating a beam installation process of the construction method using the modular structure according to the first example;
FIG. 6 is an explanatory diagram illustrating a modular structure according to a second example;
FIG. 7 is an explanatory diagram illustrating a modular structure according to a third example;
FIG. 8 is an explanatory diagram illustrating a modular structure according to a fourth example;
FIG. 9 is an explanatory diagram illustrating a modular structure according to a first modification of the first example;
FIG. 10 is an explanatory diagram illustrating a modular structure according to a second modification of the first example;
FIG. 11 is an explanatory diagram illustrating a modular structure according to a third modification of the first example;
FIG. 12A is an explanatory diagram illustrating a sidewall concrete application process in a plant construction work of the related art;
FIG. 12B is an explanatory diagram illustrating an equipment loading process in a plant construction work of the related art;
FIG. 12C is an explanatory diagram illustrating an equipment component loading process in a plant construction work of the related art;
FIG. 13A is an explanatory diagram illustrating a scaffold building process in a plant construction work of the related art;
FIG. 13B is an explanatory diagram illustrating a ceiling concrete application process in a plant construction work of the related art;
FIG. 13C is an explanatory diagram illustrating a hanging tool installation process in a plant construction work of the related art;
FIG. 14A is an explanatory diagram illustrating a scaffold removal process in a plant construction work of the related art;
FIG. 14B is an explanatory diagram illustrating a painting process in a plant construction work of the related art; and

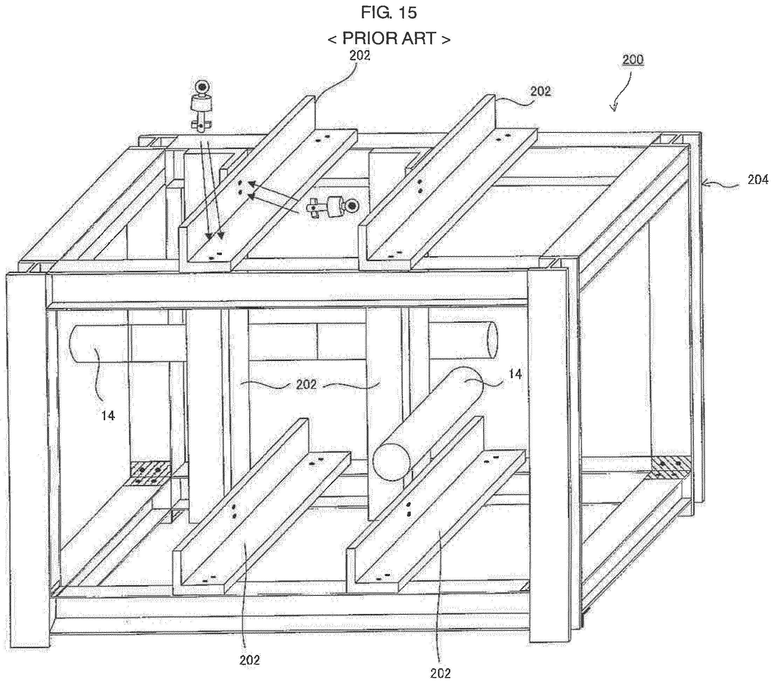

FIG. 15 is an explanatory diagram illustrating a modular structure disclosed in Patent Document 3.

### DISCLOSURE OF THE INVENTION

Hereinafter, examples of the invention will be described in detail with reference to the accompanying drawings. It would be appreciated that elements, types, combinations, shapes, and relative arrangement thereof described in the examples are not intended to limit the scope of the invention, but just for illustrative purposes. First, a modular structure and a construction method according to an example of the invention will be described with reference to the accompanying drawings.

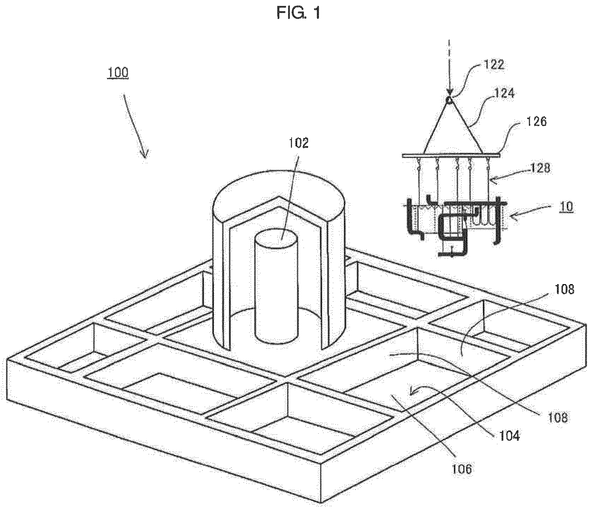

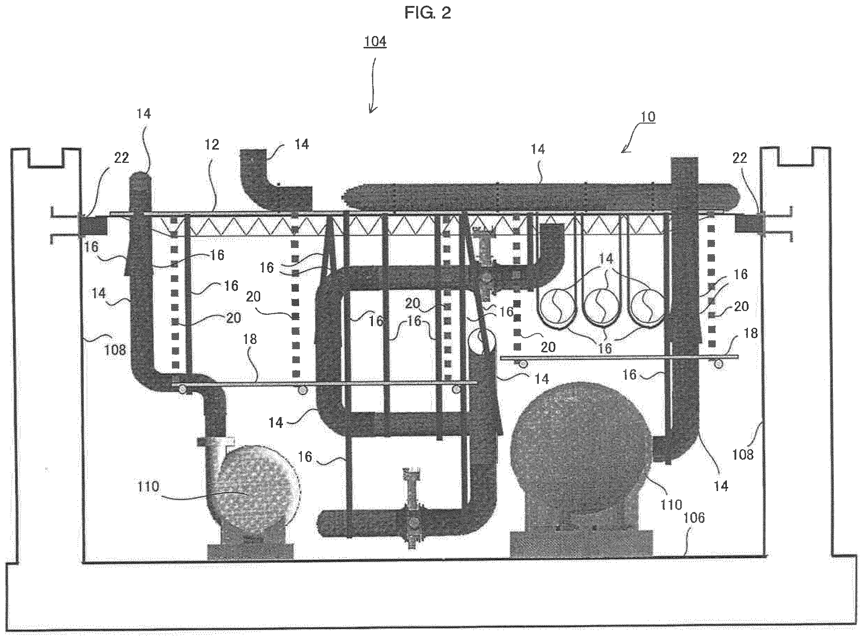

FIG. 1 is an explanatory diagram illustrating an atomic power plant. FIG. 2 is an explanatory diagram illustrating a modular structure according to a first example . Description will now be made for an atomic power plant 100 as an example of a plant where the modular structure according to the present invention is loaded as illustrated in FIG. 1. The atomic power plant 100 includes a reactor pressure vessel 102 in the center and a plurality of equipment units 110. A plurality of compartments 104 divided for each equipment unit 110 are formed around the reactor pressure vessel 102. Various types of equipment units 110 and a plurality of pipes (equipment components 14) are installed in the compartment 104. First, concrete and the like are applied to the floor surface 106 (refer to FIG. 2) and the sidewall 108 (refer to FIG. 2) of the compartment 104, and the equipment 110 and the equipment component 14 are loaded. As the equipment 110 and the equipment component 14 are loaded, concrete is applied to the ceiling, and a painting work is performed for the interior of the compartment 104.

In the modular structure 10 of the first example, the equipment component 14 is placed on or hung from a beam 12 extending in a horizontal direction. A dimension of the beam 12 is set such that a longitudinal direction of the beam 12 extending in the horizontal direction is fit to the compartment 104. The beam 12 is formed of a member having a truss structure having high rigidity against a bending stress.

The wire rope 16 serving as a hanging means is formed of a steel chain and the like, and one end thereof is connected to the beam 12. In addition, the other end of the wire rope 16 is connected to the equipment component 14. The equipment component 14 is temporarily supported by the wire rope 16 in the compartment 104 while it is hung with the wire rope 16. In addition, it is possible to temporarily support the equipment component 14 in a layout position by controlling a length of the wire rope 16. In addition, it is possible to fix a height and a direction of the equipment component 14 by connecting another wire rope 16 in a different position of one equipment component 14. The suspended scaffold 18 has a longitudinal direction extending in a horizontal direction. The suspended scaffold 18 is used as a scaffold when the equipment component 14 of the compartment 104 is fixedly installed in the equipment 110 or when the sidewall 108 is painted. The suspended scaffold 18 is hung with a hoisting chain 20 from the beam 12.

Meanwhile, a support member 22 is arranged in the sidewall 108 of the compartment 104. The support member 22 is a member embedded into the sidewall 108 of the compartment 104. The support member 22 is embedded distant from the ceiling surface such that a worker can walk on the beam 12. The support member 22 is arranged to be exposed to the inner space of the compartment 104. In addition, the support member 22 has the same height across a pair of facing sidewalls 108 of the compartment 104. Furthermore, the beam 12 is supported by the support member 22 such that both ends of the beam 12 in a longitudinal direction are provided on the upper surfaces of the support members 22. It is preferable that the support member 22 is arranged when the concrete is applied to the sidewall 108. Although a pair of support members 22 are arranged in FIG. 2, the number of support members 22 may change depending on the number of beams 12 loaded in the compartment 104.

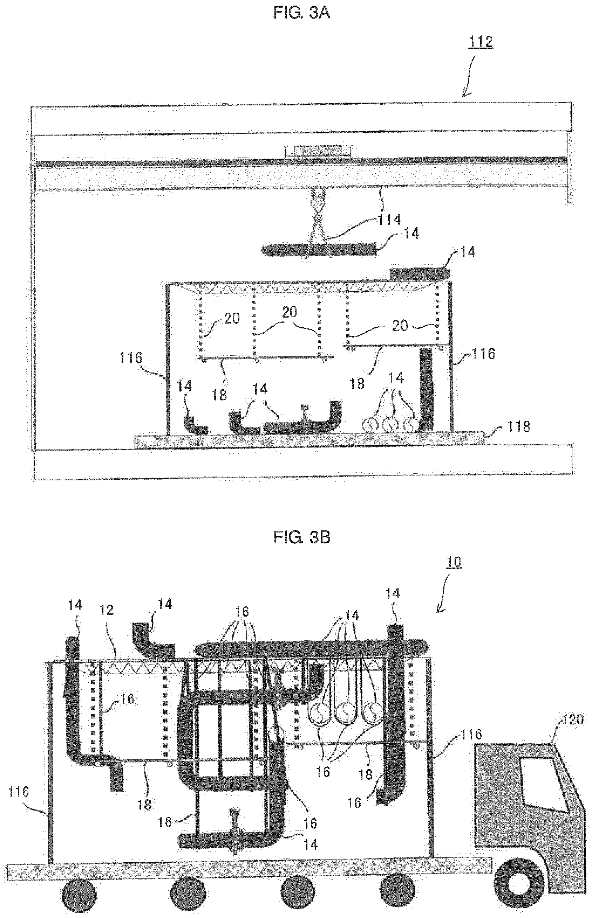

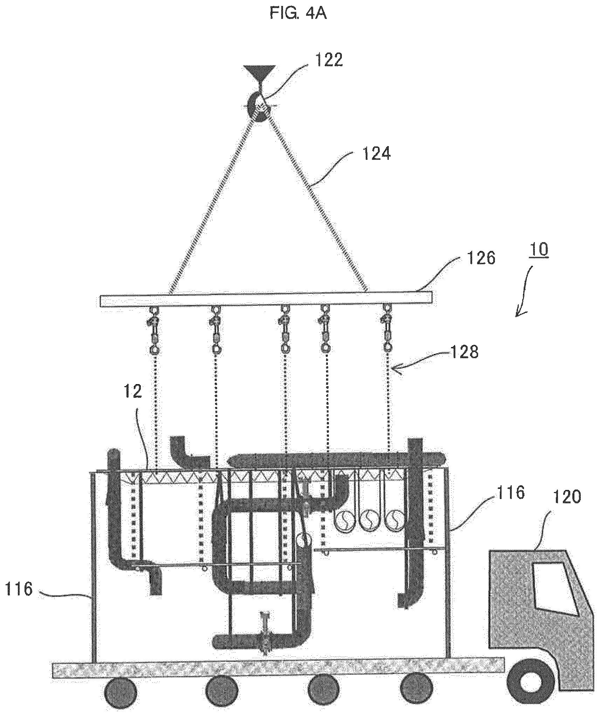

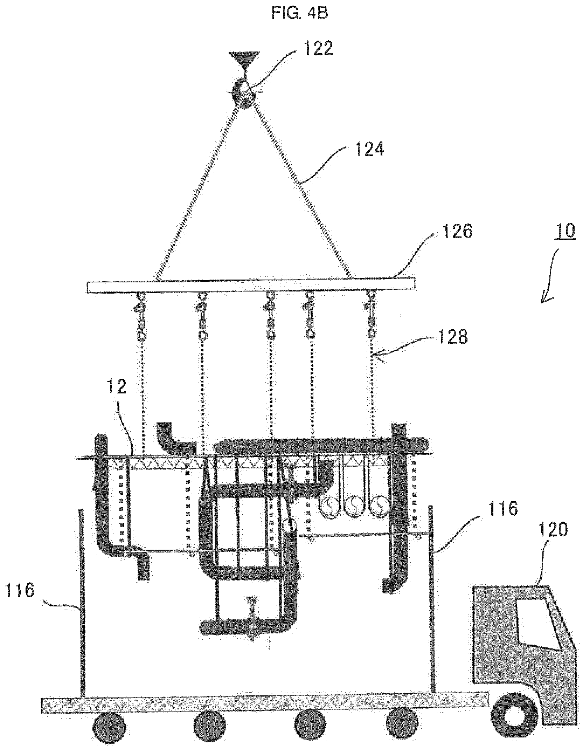

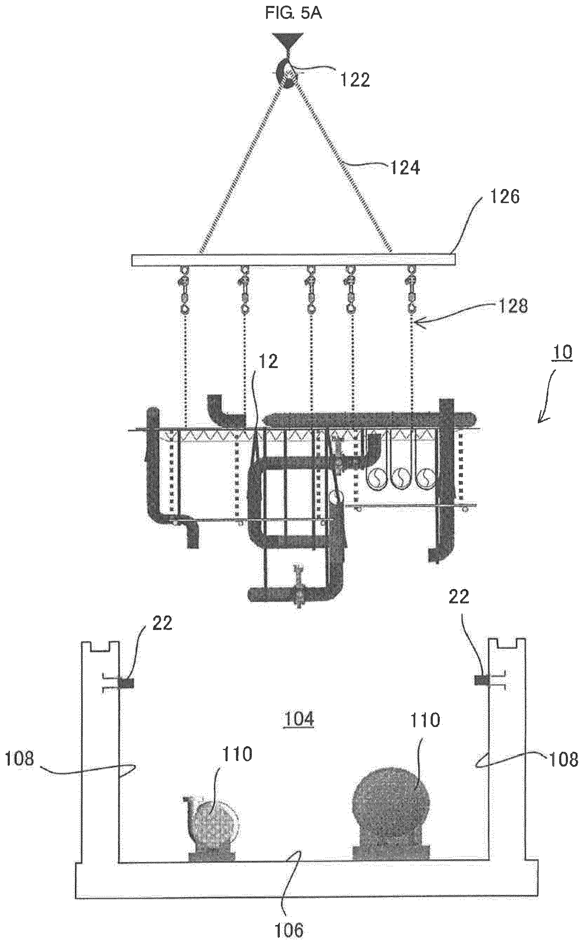

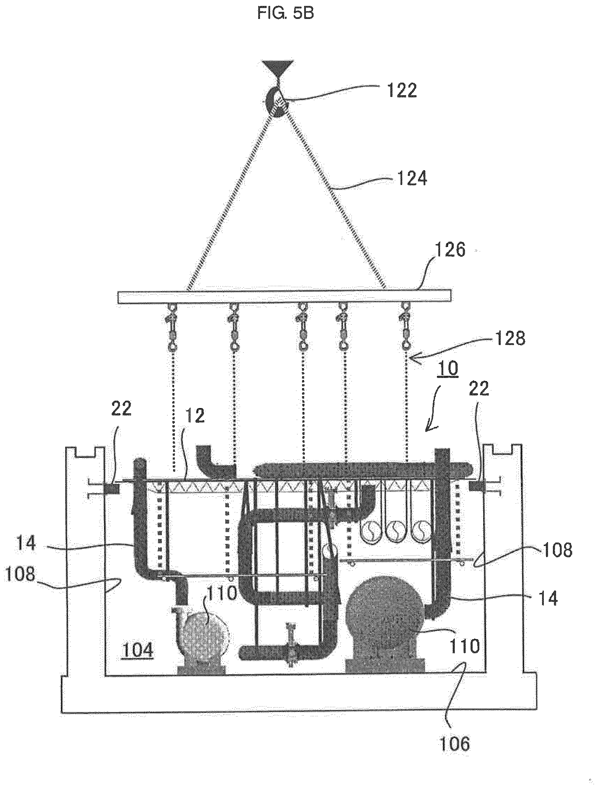

FIGS. 3A and 3B, 4A and 4B, and 5A and 5B are explanatory diagrams illustrating a construction method using the modular structure according to the first example. FIG. 3A illustrates an assembling process. FIG. 3B illustrates a delivery process. FIG. 4A illustrates a slinging process. FIG. 4B illustrates a hoisting process. FIG. 5A illustrates a loading process. FIG. 5B illustrates a beam installation process.

Next, description will be made for a process of assembling and loading the modular structure 10 according to the present example. The modular structure 10 is assembled in a factory 112 or the like located in a different place from that of the atomic power plant 100 where the compartment 104 is provided. Then, the modular structure 10 is delivered using a vehicle 120 and is loaded on the compartment 104 using a large crane.

The factory 112 includes an overhead crane 114 that hoists the beam 12 and the equipment component 14, a post 116 that supports the beam 12 when the modular structure 10 is assembled and delivered, and a leveling base 118 where the post 116 is erected.

First, as illustrated in FIG. 3A, the post 116 is erected on the leveling base 118. In addition, the beam 12 where a suspended scaffold 18 is installed in advance is hoisted using the overhead crane 114 and is supported by or connected to the post 116.

Next, the equipment component 14 is hoisted and is hung from the beam 12 using a wire rope 16 the length of which is adjusted such that the equipment component 14 is temporarily supported in a layout position. In this case, in order to allow an orientation of the equipment component 14 to be fixed, the equipment component 14 is hung by connecting the wire rope 16 in different positions for each equipment component 14.

An equipment component 14 laid out in a higher position than that of the beam 12 in the compartment is installed using a tying means (not illustrated) on the beam 12 before the beam 12 is hoisted. In addition, a structure including the suspended scaffold 18, the equipment component 14, the post 116, and the beam 12 is placed on a cargo deck of a hoist vehicle 120 using the overhead crane 114 and is delivered to the compartment 104 (where a large crane is placed).

Meanwhile, in the compartment 104, the support member 22 is fixed to the sidewall 108 by embedding the support member 22 in a height position corresponding to the supporting position of the beam 12 as illustrated in FIG. 5A when concrete is applied to the sidewall 108 of the compartment 104. In addition, the equipment 110 where the equipment component 14 that is supported by the modular structure 10 is connected is loaded in the compartment 104.

Then, as the vehicle arrives at a place where a large crane (crane hook 122) reaches, a slinging process using a large crane is performed as illustrated in FIG. 4A. In the slinging process, a balance 126 whose both ends in a longitudinal direction are supported by a wire rope 124 moored in a crane hook 122 provided in the leading end of the large crane so as to keep the longitudinal direction horizontal, and a plurality of chain blocks 128 installed in different positions along the longitudinal direction of the balance 126 are used.

While the wire rope 124, the balance 126, and the chain blocks 128 are integrated into a single body, the wire rope 124 is moored in the crane hook 122, and the chain blocks 128 are connected to the beam 12. In addition, the beam 12 and the post 116 are disconnected, and the beam 12 is lifted along with the suspended scaffold 18 and the equipment component 14 as illustrated in FIG. 4B. Then, the beam 12 is moved to a position right over the compartment 104 as illustrated in FIG. 5A.

As illustrated in FIG. 5B, the crane hook 122 is lowered so that the beam 12 is placed on and connected to the support member 22. In this state, the beam 12 and the chain block 128 are disconnected, and the equipment component 14 is temporarily fixed to the loaded equipment 110, so that the process of assembling and loading the modular structure 10 is completed. As a result, the equipment component 14 is temporarily supported in a layout position in the compartment 104.

Then, a ceiling installation work may be performed by using the beam 12 or the suspended scaffold 18 as a scaffold, or a painting work for the floor surface 106, the sidewall 108, and the like may be performed. In this manner, by supporting the beam 12 with the support member 22, it is not necessary to arrange a plurality of support members for temporarily supporting the equipment component 14 on the floor surface unlike the related art. Therefore, it is possible to easily perform a painting work for the floor surface 106.

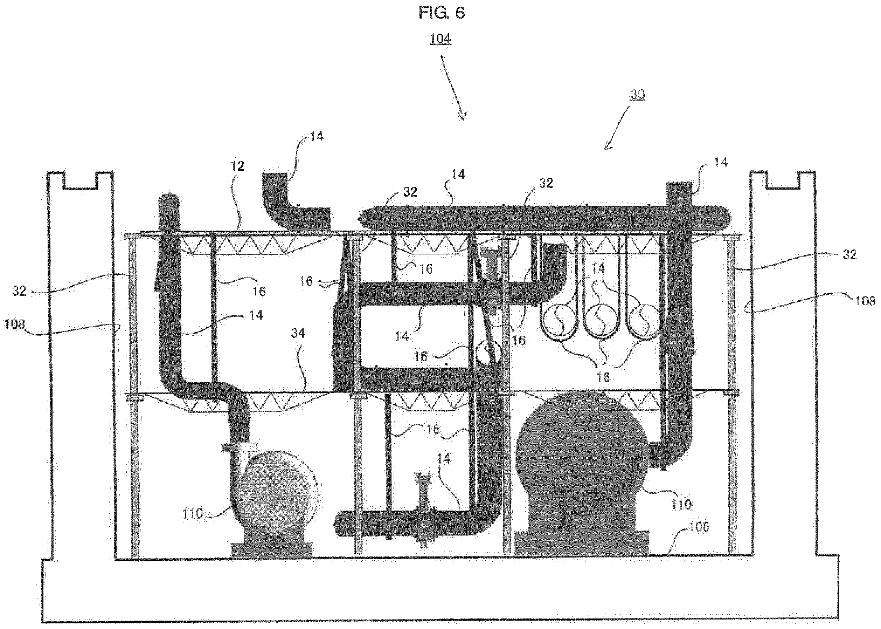

FIG. 6 is an explanatory diagram illustrating a modular structure according to a second example, not part of the present invention. The modular structure 30 according to the second example commonly uses a structure including the beam 12, the suspended scaffold 18, and the equipment component 14 according to the first example. However, the support member 22 is not arranged in the sidewall 108 of the compartment 104, but the post 32 is erected on the floor surface 106 in a position right under both ends or the center of the longitudinal direction of the beam 12, so that the beam 12 is supported by the post 32.

According to the present example the post 32 preferably has a predetermined strength or rigidity similar to that of mine timbering. In addition, the beam 12 is placed on and connected to the upper end of the post 32. If the beam 12 is supported by the post 32 according to the present example, it is possible to temporarily support the equipment component 14 without performing a special work for the sidewall 108 and easily perform a painting work of the floor surface 106.

Furthermore, the modular structure 30 according to the second example includes a second beam 34 whose both ends are supported by the post 32 in a position lower than that of the beam 12, so that the equipment component 14 can be installed on the second beam 34. A position of the second beam 34 connected to the post 32 is controlled such that the equipment component 14 installed on the second beam 34 is positioned in a layout position in the compartment 104. As a result, it is possible to reduce the number of hoisting portions used to hang the equipment component 14 from the beam 12. In addition, it is possible to use the second beam 34 to hang the equipment component 14 installed in a position lower than the second beam 34 in the compartment 104. As a result, it is possible to reduce the length of the wire rope 16, alleviate a vibration of the equipment component 14, and lower a possibility of failure. Since the post 32 is connected using the second beam 34, it is possible to improve rigidity of the modular structure 30 and increase the number of suspended equipment components 14.

According to the present example, the modular structure 30 including the beam 12, the post 32, the second beam 34, and the equipment component 14 is assembled in the factory 112. Then, the modular structure 30 is delivered and introduced into the compartment 104 using a large crane, so that the modular structure 30 is loaded. Since the post 32 is erected on the floor surface 106, the equipment component 14 can be temporarily supported in a layout position in the compartment 104.

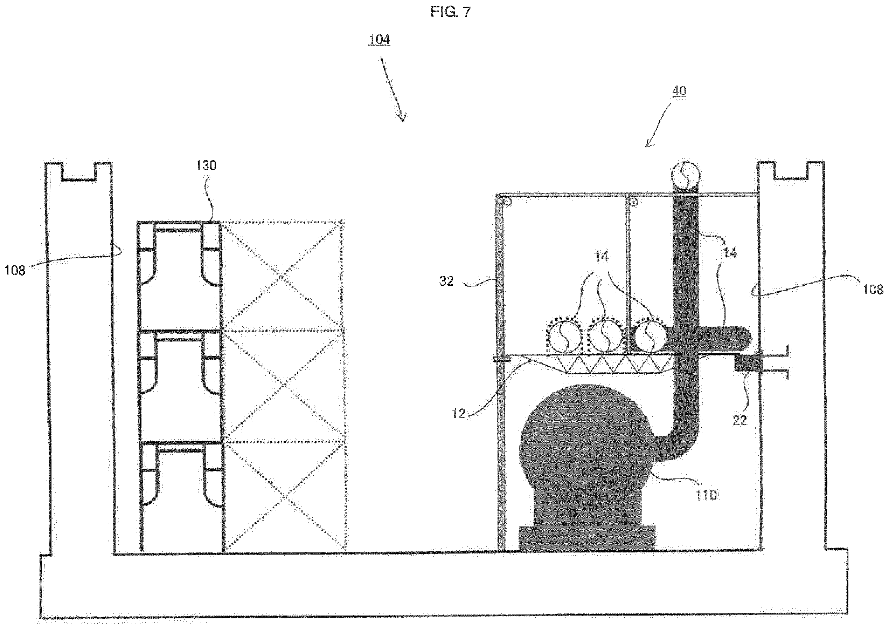

FIG. 7 is an explanatory diagram illustrating a modular structure according to a third example. In the modular structure 40 according to the third example, the support member 22 according to the first example and the post 32 according to the second example are employed while the structure including the beam 12, the suspended scaffold 18, and the equipment component 14 according to the first example is commonly used. That is, one end of the beam 12 in the longitudinal direction is supported by the support member 22, and the other opposite end of the beam 12 in the longitudinal direction is supported by the post 32.

In some cases, depending on the type of the compartment 104, the equipment 110 and the equipment component 14 are arranged only in a part of the compartment 104 instead of the entire compartment 104. In addition, it may be difficult to obtain a sufficient strength if one of the facing sidewalls 108 is in the process of applying concrete (the working scaffold 130 still remains) or if a curing period is short.

Therefore, according to the present example, the support member 22 may be arranged only in the other of the facing sidewalls 108, and one end of the beam 12 in the longitudinal direction is supported by the support member 22, so that the other end of the beam 12 can be supported by the post 32. Therefore, it is possible to change a method of supporting the beam 12 depending on a forming situation of the sidewall 108. The post 32 may be installed in the beam 12 during the assembling process in the factory 112 or may be erected on the floor surface 106 in advance and be connected to the beam 12 when the beam 12 is loaded.

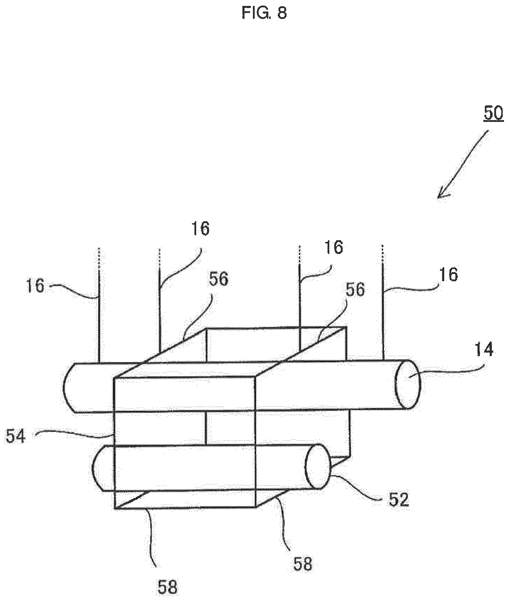

FIG. 8 is an explanatory diagram illustrating a modular structure according to a fourth example. The modular structure 50 according to the fourth example includes a second equipment component 52 arranged right under the equipment component 14 and a frame 54 hung by the wire rope 16 and arranged to extend across the equipment component 14 and support the second equipment component 52. Although the second equipment component 52 is similar to the equipment component 14, the second equipment component 52 is separated from the equipment component 14, and the layout position of the second equipment component 52 is right under the layout position of the equipment component 14. Therefore, since the equipment component 14 is inserted between the beam 12 and the second equipment component 52, it is difficult to hang the second equipment component 14 from the beam 12.

In this regard, according to the present example, the second equipment component 52 is hung using the frame 54. The frame 54 is obtained by combining a bar-like member with a square box shape, and is arranged such that at least a member 56 corresponding to a top of the square box extends across the equipment component 14. That is, the equipment component 14 is floated inside the square box formed by the frame 54. Meanwhile, the second equipment component 52 is fixed to, for example, a member 58 corresponding to a bottom of the box shape formed by the frame 54 using an engaging means (not illustrated). In addition, the wire rope 16 is connected to the frame 54, and the frame 54 is hung from the beam 12. As a result, it is possible to independently hang the equipment component 14 and the second equipment component 52 from the beam 12 (or the second beam 34) regardless of vertical interference between the equipment component 14 and the second equipment component 52. In addition, the third and fourth examples may be implemented simultaneously.

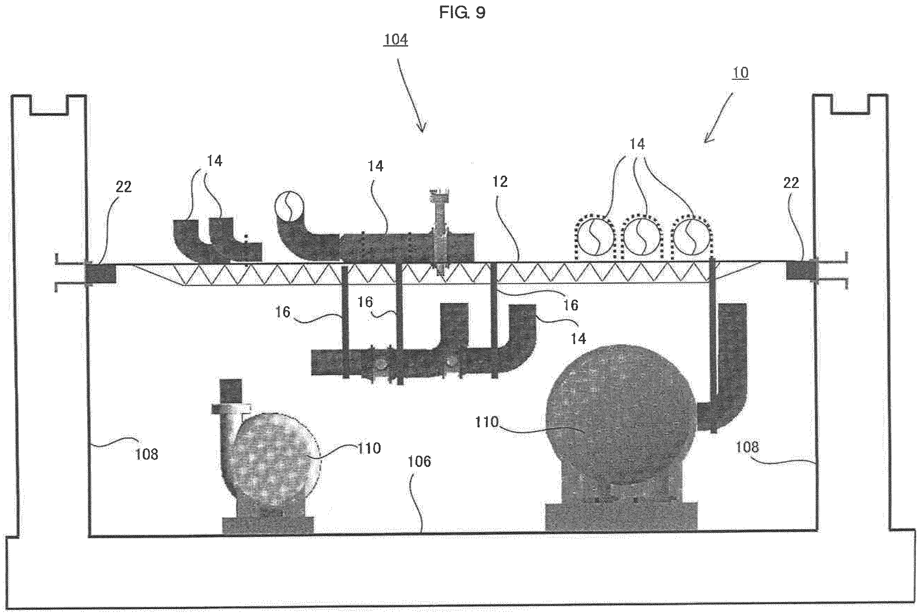

FIG. 9 is an explanatory diagram illustrating a first modification of the first example. In some cases, depending on the type of the compartment 104, the ceiling may be low, or it may not be necessary to temporarily support the equipment component 14 in a high position. In this case, according to the first modification, the support member 22 may be arranged in a middle height position of the sidewall 108, and the suspended scaffold 18 may not be connected to the beam 12.

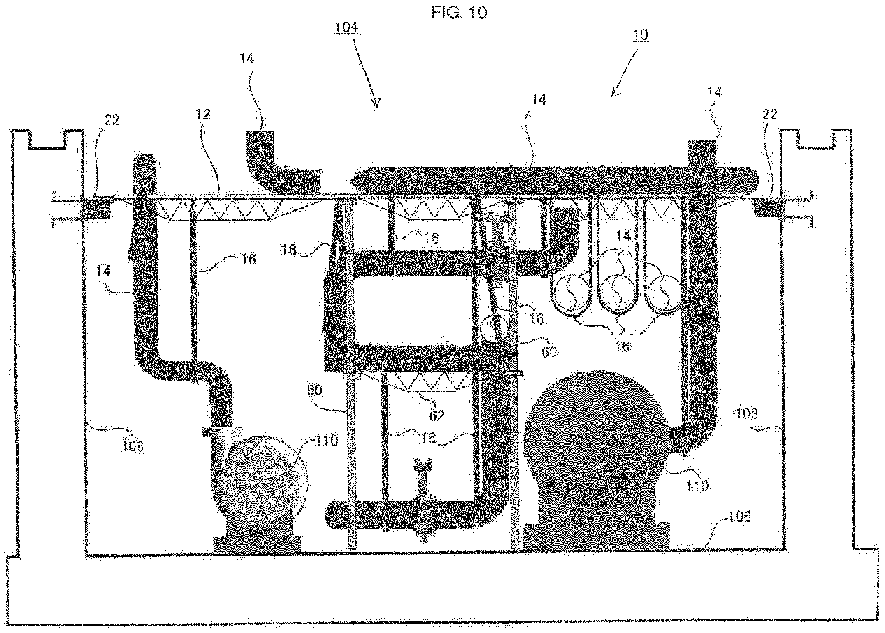

FIG. 10 is an explanatory diagram illustrating a second modification of the first example. According to the second modification, the center of the beam 12 in the longitudinal direction is supported by the second post 60 arranged in the floor surface 106 of the compartment 104. Similar to the post 32, the second post 60 is formed of mine timbering or the like. The second post 60 may be installed in the beam 12 when the modular structure 10 is assembled in the factory 112 or may be erected on the floor surface 106 of the compartment 104 in advance. As a result, it is possible to prevent bending of the beam 12 and hang a plurality of equipment components 14 from the beam 12. In addition, when there are a plurality of second posts 60, the second posts 60 may be connected to each other using a subsidiary beam 62 to increase rigidity between the second posts 60, and the equipment component 14 may be installed in the subsidiary beam 62. This modification may also apply to the second and third embodiments.

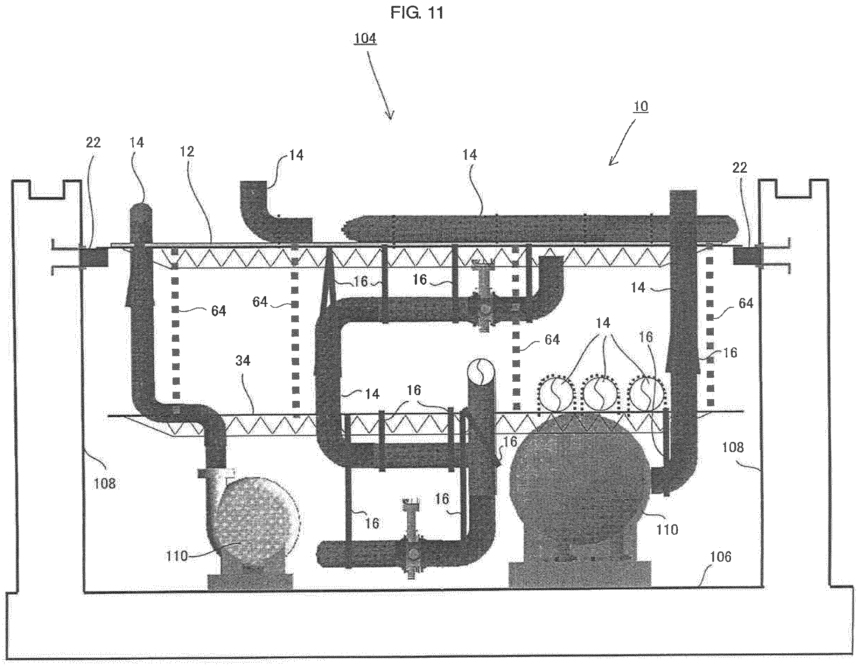

FIG. 11 is an explanatory diagram illustrating a third modification of the first example. In the third modification, the second beam 34 is hung from the beam 12 using the hoisting chain 64, and the equipment component 14 is arranged on the second beam 34. In order to assemble such a structure, first, the equipment component 14 is installed in the beam 12, and the beam 12 is hoisted by the overhead crane 114 (refer to FIG. 3A) immediately before the second beam 34 is hoisted while the second beam 34 is connected to the beam 12 using the hoisting chain 64.

By installing the equipment component 14 in the second beam 34 and further hoisting the beam 12, the second beam 34 is hoisted, and the beam 12 is placed on and connected to the post 116 (refer to FIG. 3A). In addition, another equipment component 14 may be loaded using the overhead crane 114 and may be hung from the beam 12 or the second beam 34 using the wire rope 16.

In this configuration, it is possible to hang the equipment component 14 from the second beam 34 in an installation position lower than that of the second beam 34 in the compartment 104. As a result, it is possible to shorten the length of the wire rope 16, alleviate a vibration of the equipment component 14, and lower a possibility of failure.

It is possible to provide a modular structure and a construction method, capable of temporarily supporting the equipment component in a layout position in the compartment, suppressing interference with the floor surface to the minimum, and efficiently performing a work for the floor surface such as a painting work.

### EXPLANATIONS OF LETTERS OR NUMERALS

- 10: MODULAR STRUCTURE,
- 12: BEAM,
- 14: EQUIPMENT COMPONENT,
- 16: WIRE ROPE,
- 18: SUSPENDED SCAFFOLD,
- 20: HOISTING CHAIN,
- 22: SUPPORT MEMBER,
- 30: MODULAR STRUCTURE,
- 32: POST,
- 34: SECOND BEAM,
- 40: MODULAR STRUCTURE,
- 50: MODULAR STRUCTURE,
- 52: SECOND EQUIPMENT COMPONENT,
- 54: FRAME,
- 56: MEMBER,
- 58: MEMBER,
- 60: SECOND POST,
- 62: SUBSIDIARY BEAM,
- 64: HOISTING CHAIN,
- 100: ATOMIC POWER PLANT,
- 102: REACTOR PRESSURE VESSEL,
- 104: COMPARTMENT,
- 106: FLOOR SURFACE,
- 108: SIDEWALL,
- 110: EQUIPMENT,
- 112: FACTORY,
- 114: OVERHEAD CRANE,
- 116: POST,
- 118: LEVELING BASE,
- 120: VEHICLE,
- 122: CRANE HOOK,
- 124: WIRE ROPE,
- 126: BALANCE,
- 128: CHAIN BLOCK,
- 130: WORKING SCAFFOLD,
- 132: SCAFFOLD,
- 134: CEILING ,
- 136: HANGING TOOL,
- 200: MODULAR STRUCTURE,
- 202: SUPPORT MEMBER,
- 204: FRAME.

## Claims

1. A modular structure (10) comprising:
a hanging means (16) that is hanging a first equipment component (14) adapted to be installed in a second equipment component (110) in a compartment (104) of a nuclear plant (100) and that has a length that is adjustable ([0038]) depending on a layout arrangement position of the first equipment component (14) in the compartment (104);
the first equipment component (14) being temporarily supportable in the layout arrangement position;
a first beam (12) suitable for being arranged in the compartment (104), the hanging means (16) being installed on the first beam (12) to hang the first equipment component (14) from the first beam (12),
**characterized in that**
a suspended scaffold (18) is hung with a hoisting chain (20) from the first beam (12), such that it can be used as a scaffold (18) when the first equipment component (14) of the compartment (104) is fixedly installed in the second equipment (110) in the compartment (104) of the plant (100).

2. The modular structure (10) according to claim 1, wherein the first beam (12) is suitable for being supported by a support member (22) arranged in a sidewall (108) of the compartment (104) and exposed to an inner space of the compartment (104).

3. The modular structure (10) according to claim 2, wherein a second beam (34) is hung from the first beam (12), and the hanging means (16) is installed in the first beam (12) and the second beam (34).

4. The modular structure (10) according to claim 1, wherein the first beam (12) is supported by a post (32) connected to the first beam (12) and erectable on a floor surface (106) of the compartment (104).

5. The modular structure (10) according to claim 4, wherein the second beam (34) is connected to the post (32) in a position lower than that of the first beam (12), and the hanging means is installed in the first beam (12) and the second beam (34).

6. The modular structure (10) according to claim 1, wherein the first beam (12) is suitable for being supported by a support member (22) arranged in a sidewall (108) of the compartment (104) and exposed to an inner space side of the compartment (104) and a post (32) connected to the first beam (12) and erectable on a floor surface (106) of the compartment (104).

7. The modular structure (10) according to any one of claims 1 to 6, wherein a center of the first beam (12) in a longitudinal direction is supported by a second post (60) arranged on a floor surface (106) of the compartment (104).

8. The modular structure (10) according to any one of claims 1 to 6, further comprising:
a second equipment component (52) arranged right under the first equipment component (14); and
a frame (54) that is arranged to extend across the first equipment component (14), supports the second equipment component (52), and is hung by the hanging means (16).

9. A modular construction method comprising:
hanging a first equipment component (14), to be installed in a second equipment component (110) in a compartment (104) of a nuclear plant (100), using a hanging means (16) having a length adjusted to match a layout installation position of the first equipment component (14) in the compartment (104);
installing the hanging means (16) on a first beam (12); and
temporarily supporting the first equipment component (14) in the arrangement position by loading the first beam (12) in the compartment (104) while the first equipment component (14) is hung,
**characterized in that**
a suspended scaffold (18) is hung with a hoisting chain (20) from the first beam (12), and the suspended scaffold (18) is used as a scaffold when the first equipment component (14) of the compartment (104) is fixedly installed in the second equipment component (110) of the compartment (104) of the plant (100).

10. The modular construction method according to claim 9, wherein the first beam (12) is suitable for being supported by a support member (22) arranged in a sidewall (108) of the compartment (104) and exposed to an inner space side of the compartment (104) and/or a post (32) connected to the first beam (12) and erectable on a floor surface (106) of the compartment (104).

## Patentansprüche

1. Modulstruktur (10) mit:
einem Hängemittel (16), welches eine erste Ausrüstungskomponente (14), welche geeignet ist, in einer zweiten Ausrüstungskomponente (110) in einem Raum (104) eines Kernkraftwerks (100) installiert zu werden, aufhängt, und welches eine Länge aufweist, die einstellbar ([0038]) ist, in Abhängigkeit von einer Anlagenanordnungsposition der ersten Ausrüstungskomponente (14) in dem Raum (104), wobei die erste Ausrüstungskomponente (14) zeitweise in der Anlagenanordnungsposition gelagert werden kann,
einem ersten Träger (12), der geeignet ist, in dem Raum (104) angeordnet zu werden, wobei die Hängemittel (16) auf dem ersten Träger (12) installiert sind, um die erste Ausrüstungskomponente (14) von dem ersten Träger (12) aus aufzuhängen,
**dadurch gekennzeichnet, dass**
ein aufgehängtes Gerüst (18) mit einer Förderkette (20) an dem ersten Träger (12) aufgehängt ist, derart, dass es als ein Gerüst (18) verwendet werden kann, wenn die erste Ausrüstungskomponente (14) des Raums (104) fest in der zweiten Ausrüstung (110) in dem Raum (104) des Kernkraftwerks (100) installiert ist.

2. Modulstruktur (10) nach Anspruch 1,
wobei der erste Träger (12) geeignet ist, von einem Trägermittel (22) getragen zu werden, das in einer Seitenwand (108) des Raums (104) angeordnet und zum Innenraum des Raums (104) hin ausgerichtet ist.

3. Modulstruktur (10) nach Anspruch 2,
wobei ein zweiter Träger (34) an dem ersten Träger (12) aufgehängt ist, und das Hängemittel (16) an dem ersten Träger (12) und dem zweiten Träger (34) angeordnet ist.

4. Modulstruktur (10) nach Anspruch 1,
wobei der erste Träger (12) von einem Ständer (32) getragen wird, der mit dem ersten Träger (12) verbunden ist und der auf einer Bodenfläche (106) des Raums (104) errichtbar ist.

5. Modulstruktur (10) nach Anspruch 4,
wobei der zweite Träger (34) mit dem Ständer (32) in einer Position verbunden ist, die niedriger liegt als die des ersten Träger (12) und wobei das Hängemittel an dem ersten Träger (12) und dem zweiten Träger (34) angeordnet ist.

6. Modulstruktur (10) nach Anspruch 1,
wobei der erste Träger (12) geeignet ist, von einem Trägermittel (22), welches in einer Seitenwand (108) des Raums (104) angeordnet und zum Innenraum des Raums (104) hin ausgerichtet ist, und von einen Ständer (32), der mit dem ersten Träger (12) verbunden und auf einer Bodenfläche (106) des Raums (104) errichtbar ist, getragen zu werden.

7. Modulstruktur (10) nach einem der Ansprüche 1 bis 6,
wobei eine Mitte des ersten Trägers (12) in Längsrichtung durch einen zweiten Ständer (60) getragen wird, der auf einer Bodenfläche (106) des Raums (104) angeordnet ist.

8. Modulstruktur (10) nach einem der Ansprüche 1 bis 6, die ferner aufweist:
eine zweite Ausrüstungskomponente (52), die genau unter der ersten Ausrüstungskomponente (14) angeordnet ist, und
einen Rahmen (54), der so angeordnet ist, dass er sich durch die erste Ausrüstungskomponente (14) erstreckt, die zweite Ausrüstungskomponente (52) trägt, und an den Hängemitteln (16) aufgehängt ist.

9. Modulkonstruktionsverfahren mit folgenden Schritten:
Hängen einer ersten Ausrüstungskomponente (14), welche in einer zweiten Ausrüstungskomponente (110) installiert werden soll, in einem Raum (104) eines Kernkraftwerks (100) unter Verwendung eines Hängemittels (16), welches eine Länge aufweist, die eingestellt wird, um sich an eine Anlageninstallationsposition der ersten Ausrüstungskomponente (14) in dem Raum (104) anzupassen,
Installieren des Hängemittels (16) auf einem ersten Träger und
zeitweises Tragen der ersten Ausrüstungskomponente (14) in der Anordnungsposition durch Laden des ersten Trägers (12) in den Raum (104), während die erste Ausrüstungskomponente (14) gehängt ist,
**dadurch gekennzeichnet, dass**
ein aufgehängtes Gerüst (18) mit einer Förderkette (20) an den ersten Träger (12) gehängt wird, und das aufgehängte Gerüst (18) als ein Gerüst verwendet wird, wenn die erste Ausrüstungskomponente (14) des Raums (104) fest in der zweiten Ausrüstungskomponente (110) des Raums (104) des Kernkraftwerks (100) installiert ist.

10. Modulkonstruktionsverfahren nach Anspruch 9,
wobei der erste Träger (12) geeignet ist, von einem Trägermittel (22), das in einer Seitenwand (108) des Raums (104) angeordnet und zum Innenraum des Raums (104) hin ausgerichtet ist, und/oder von einem Ständer (32), der mit dem ersten Träger (12) verbunden ist und auf einer Bodenfläche (106) des Raums (104) errichtbar ist, getragen zu werden.

## Revendications

1. Structure modulaire (10) comprenant :
un moyen de suspension (16) qui suspend un premier composant d'équipement (14) adapté à être installé dans un deuxième composant d'équipement (110) dans un compartiment (104) d'une centrale nucléaire (100) et qui a une longueur qui est ajustable ([0038]) en fonction d'une position d'agencement de configuration du premier composant d'équipement (14) dans le compartiment (104) ;
le premier composant d'équipement (14) pouvant être temporairement supporté dans la position d'agencement de configuration ;
une première poutre (12) appropriée à être agencée dans le compartiment (104), le moyen de suspension (16) étant installé sur la première poutre (12) pour suspendre le premier composant d'équipement (14) à la première poutre (12),
**caractérisée en ce que**
un échafaudage suspendu (18) est suspendu avec une chaîne de levage (20) à la première poutre (12), de telle sorte qu'il peut être utilisé comme un échafaudage (18) lorsque le premier composant d'équipement (14) du compartiment (104) est installé fixe dans le deuxième équipement (110) dans le compartiment (104) de la centrale (100).

2. Structure modulaire (10) selon la revendication 1, dans laquelle la première poutre (12) est appropriée à être supportée par un élément support (22) agencé dans une paroi latérale (108) du compartiment (104) et exposé à un espace intérieur du compartiment (104).

3. Structure modulaire (10) selon la revendication 2, dans laquelle une deuxième poutre (34) est suspendue à la première poutre (12), et le moyen de suspension (16) est installé dans la première poutre (12) et la deuxième poutre (34).

4. Structure modulaire (10) selon la revendication 1, dans laquelle la première poutre (12) est supportée par un poteau (32) connecté à la première poutre (12) et pouvant être érigé sur une surface de sol (106) du compartiment (104).

5. Structure modulaire (10) selon la revendication 4, dans laquelle la deuxième poutre (34) est connectée au poteau (32) dans une position plus basse que celle de la première poutre (12), et le moyen de suspension est installé dans la première poutre (12) et la deuxième poutre (34).

6. Structure modulaire (10) selon la revendication 1, dans laquelle la première poutre (12) est appropriée à être supportée par un élément support (22) agencé dans une paroi latérale (108) du compartiment (104) et exposé à un côté d'espace intérieur du compartiment (104) et un poteau (32) connecté à la première poutre (12) et pouvant être érigé sur une surface de sol (106) du compartiment (104).

7. Structure modulaire (10) selon l'une quelconque des revendications 1 à 6, dans laquelle un centre de la première poutre (12) dans un sens longitudinal est supporté par un deuxième poteau (60) agencé sur une surface de sol (106) du compartiment (104).

8. Structure modulaire (10) selon l'une quelconque des revendications 1 à 6, comprenant en outre :
un deuxième composant d'équipement (52) agencé juste en-dessous du premier composant d'équipement (14) ; et
un châssis (54) qui est agencé de façon à s'étendre au travers du premier composant d'équipement (14), supporte le deuxième composant d'équipement (52), et est suspendu par le moyen de suspension (16).

9. Procédé de construction modulaire comprenant :
la suspension d'un premier composant d'équipement (14) devant être installé dans un deuxième composant d'équipement (110) dans un compartiment (104) d'une centrale nucléaire (100), en utilisant un moyen de suspension (16) ayant une longueur ajustée de façon à correspondre à une position d'installation de configuration du premier composant d'équipement (14) dans le compartiment (104) ;
l'installation du moyen de suspension (16) sur une première poutre (12) ; et
le support temporaire du premier composant d'équipement (14) dans la position d'agencement en chargeant la première poutre (12) dans le compartiment (104) tandis que le premier composant d'équipement (14) est suspendu,
**caractérisé en ce que**
un échafaudage suspendu (18) est suspendu avec une chaîne de levage (20) à la première poutre (12), et l'échafaudage suspendu (18) est utilisé comme un échafaudage lorsque le premier composant d'équipement (14) du compartiment (104) est installé fixe dans le deuxième composant d'équipement (110) dans le compartiment (104) de la centrale (100).

10. Procédé de construction modulaire selon la revendication 9, dans lequel la première poutre (12) est appropriée à être supportée par un élément support (22) agencé dans une paroi latérale (108) du compartiment (104) et exposé à un côté d'espace intérieur du compartiment (104) et/ou un poteau (32) connecté à la première poutre (12) et pouvant être érigé sur une surface de sol (106) du compartiment (104).
